# EUROPÄISCHE PATENTSCHRIFT

(11) **EP 2 236 362 B1**
(45) Veröffentlichungstag und Bekanntmachung des Hinweises auf die Patenterteilung: **21.03.2012**
(21) Anmeldenummer: 10466010.5
(22) Anmeldetag: 24.03.2010
(51) Int. Cl.: B60R 21/34

(54) **Einachsiges Haubenscharnier eines Fahrzeuges**
Single axle cowling hinge of a vehicle
Charnière de capot à un axe d'un véhicule

(30) Priorität: 31.03.2009 CZ 20090195
(43) Veröffentlichungstag der Anmeldung: 06.10.2010
(73) Patentinhaber: Skoda Auto A.S., 293 60 Mladá Boleslav (CZ)
(72) Erfinder: Hartman, Rudolf, 51801 Dobruska (CZ)

(56) Entgegenhaltungen:
- EP-A1- 1 705 382
- DE-A1-102006 033 720

## Beschreibung

### Technisches Gebiet

Die Erfindung betrifft ein einachsiges Frontklappenscharnier an einem Kraftfahrzeug, das sich im hinteren Bereich der Frontklappe in der Nähe der Frontscheibe befindet und als aktives Frontklappenscharnier ausgeführt ist, das bei einer Fahrzeugkollision mit einem Fußgänger die Frontklappe anheben und so das Risiko der Verletzung von Personen durch die unter der Frontklappe befindlichen festen Teile mindern wird.

### Bisheriger Stand der Technik

Aus dem Dokument DE 10 2006 033 720 A1 ist die Fußgängerschutzeinrichtung beim drohenden Sturz auf die Frontklappe nach dem Oberbegriff von Anspruch 1 bekannt, die über ein einachsiges Scharnier am Vorderwagen befestigt ist. Das einachsige Scharnier umfasst einen an der Frontklappe befestigten oberen Scharnierschenkel und einen mit diesem Schenkel über eine Scharniergelenkachse verbundenen und am Vorderwagen befestigten unteren Scharnierschenkel. Der untere Scharnierschenkel enthält eine beim eventuellen Zusammenstoß auflösbare Aussparung für die Befestigung der Scharniergelenkachse. Dem einachsigen Scharnier ist ein Hubelement angeschlossen, das einen am unteren Scharnierschenkel gelenkgebundenen kraftspeichernden Aktuator und ein am oberen Scharnierschenkel gelenkgebundenes Hubelement zur Anhebung des oberen Scharnierschenkels beim Aufprall umfasst. Die Darstellung dieser Lösung bildet das direkt an der Scharniergelenkachse gelenkgebundene Hubelement, wobei die Lagerung am unteren Scharnierschenkel für die Befestigung der Scharniergelenkachse eine selbständig auflösbare Positionssicherung ausweist. Diese Positionssicherung wird durch ein Rastmechanismus und eine Feder gebildet. Der Nachteil dieser Positionssicherung ist die konstruktive Kompliziertheit und der damit verbundene höhere Finanzaufwand solcher Vorrichtung.

### Darstellung der Erfindung

Die Aufgabe wird durch ein einachsiges Frontklappenscharnier im hinteren Bereich der Frontklappe in der Nähe der Frontscheibe gelöst, das einen mit der Fahrzeugfrontklappe verbundenen Scharnierschenkel und einen mit der Fahrzeugkarosserie verbundenen Halter umfasst, auf dem mittels eines Befestigungsmittels der pyrotechnische Aktuator befestigt ist, wobei der Aktuator eine Stange mit einer Öse umfasst. Einachsiges Scharnier der Fahrzeugfrontklappe umfasst ferner eine am Halter befestigte Scharnierangel der Frontklappe, wobei zur Angel der Scharnierschenkel und die Öse der Stange des pyrotechnischen Aktuators angeschlossen sind.

Die Darstellung der Erfindung liegt darin, dass die Scharnierangel ein Abscherelement umfasst. Die Scharnierangel enthält weiter eine umschließende Unterlage, die koaxial zwischen dem Abscherelement und dem Scharnierschenkel und der Öse des Aktuatorkolbens angeordnet ist, wobei der Schenkel und die Öse in der Scheibe schwenkbar befestigt sind. Das Abscherelement enthält eine Abschernut, die im Bereich zwischen der Unterlage der Angel und dem Scharnierhalter ausgebildet ist. Das Abscherelement ist als eine Abscherschraube oder ein Abscherbolzen ausgebildet.

### Übersicht der Abbildungen in den Zeichnungen

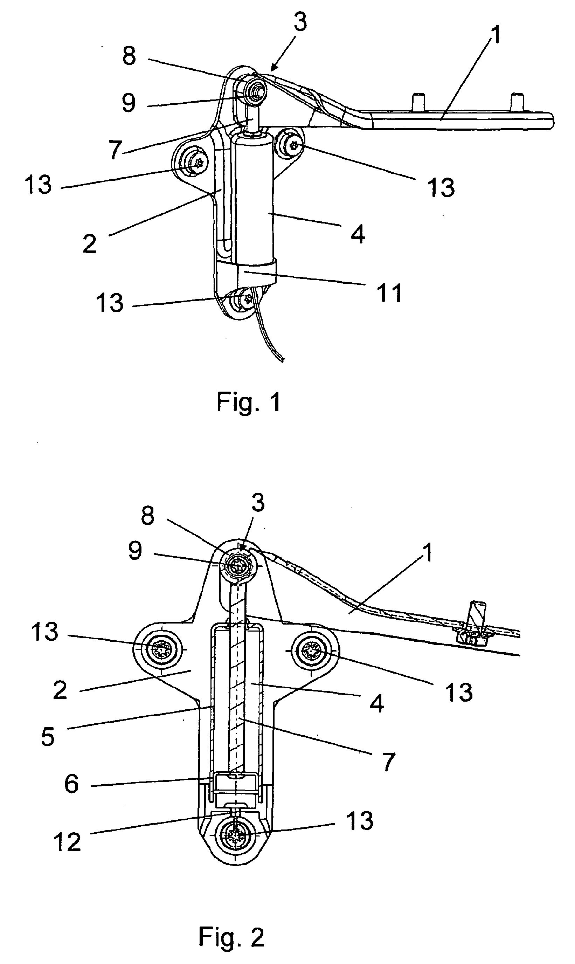

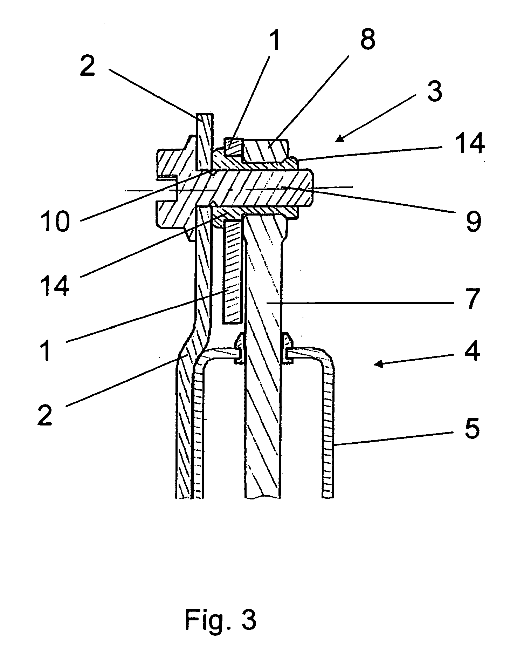

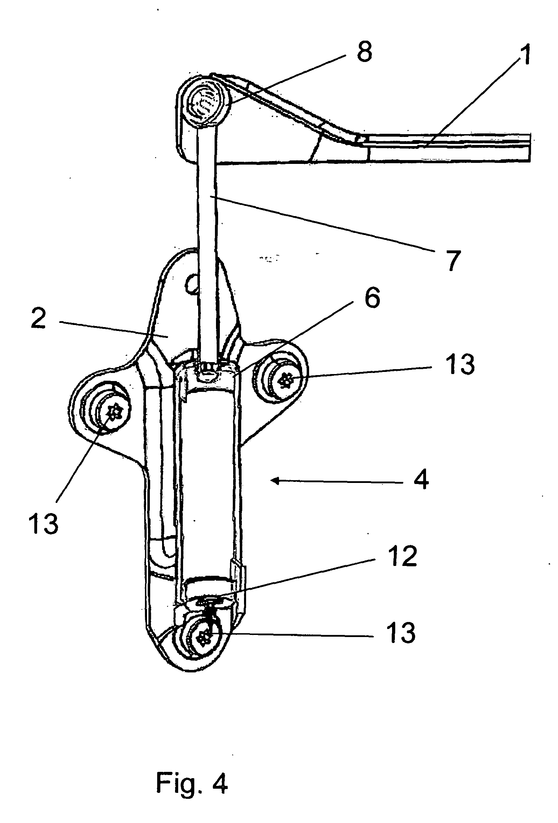

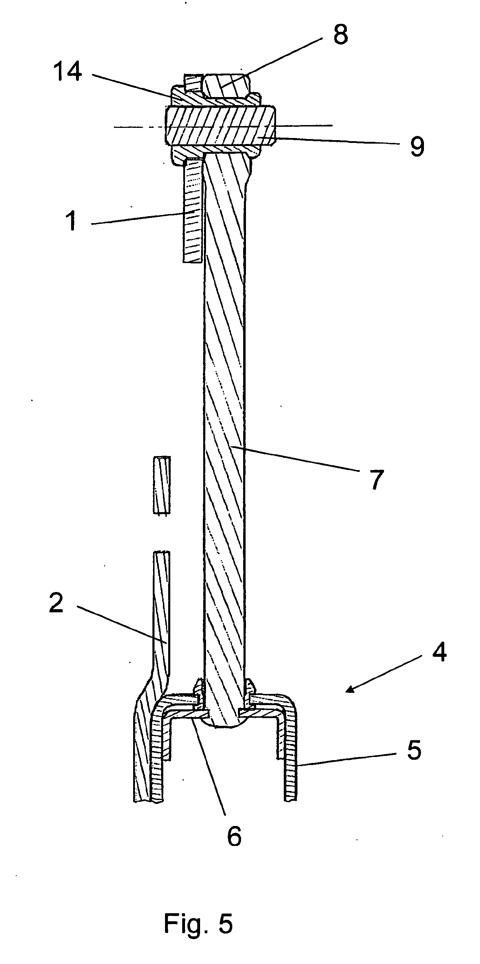

In der Fig. 1 ist in der axonometrischen Ansicht das einachsige Frontklappenscharnier in der üblichen Ruhelage dargestellt, in der Fig. 2 ist das einachsige Scharnier im Querschnitt dargestellt, in der Fig. 3 ist das Detail des einachsigen Frontklappenscharniers im Längsschnitt in der üblichen Ruhelage dargestellt, in der Fig. 4 ist die axonometrische Ansicht des einachsigen Scharniers in der ausgefahrenen Aktivstellung dargestellt, in der Fig. 5 ist ein Detail des einachsigen Scharniers im Längsschnitt in der ausgefahrenen Aktivstellung dargestellt.

### Ausführungsbeispiele der Erfindung

In der Fig. 1, 2 und 3 ist in der Ausgangsruhelage das einachsige Frontklappenscharnier des Fahrzeuges dargestellt, das sich im hinteren Bereich der Frontklappe in der Nähe der Frontscheibe befindet und als ein aktives Frontklappenscharnier ausgebildet ist, das bei einer Fahrzeugkollision mit einem Fußgänger die Frontklappe anheben und so das Risiko der Verletzung von Personen durch die unter der Frontklappe befindlichen festen Teile mindern wird. Das einachsige Frontklappenscharnier des Fahrzeuges umfasst einen mit der Fahrzeugfrontklappe verbundenen Scharnierschenkel 1 und einen mit der Fahrzeugkarosserie verbundenen Halter 2, auf dem mittels eines Befestigungsmittels 11 der pyrotechnische Aktuator 4 befestigt ist. Der Halter 2 des Scharniers ist mit der Karosserie mittels der Schrauben 13 verbunden. Der Aktuator 4 enthält eine Stange 7, die eine Öse 8 umfasst. Der pyrotechnische Aktuator 4 umfasst weiter einen Zylinder 5, einen an der Stange 7 befestigten Kolben 6 und eine unter dem Kolben 6 angeordnete Pyropatrone 12.

Das einachsige Frontklappenscharnier des Fahrzeuges wird weiter durch eine am Halter 2 des Scharniers befestigte Angel 3 gebildet. Mit der Angel 3 ist weiter der Scharnierschenkel 2 und die Öse 8 der Stange 7 des pyrotechnischen Aktuators 4 verbunden.

Die Scharnierangel 3 enthält ein Abscherelement 9 und einen umschließende Unterlage 14, die an dem Abscherelement koaxial angeordnet ist. Die Unterlegscheibe 14 ist zwischen das Abscherelement 9 und Scharnierschenkel 1 und Öse 8 der Stange 7 des Aktuators 4 eingelegt, wobei der Schenkel 1 und die Öse 8 schwenkbar in der Unterlage 14 verbunden sind. Das Abscherelement 9 enthält eine Abschernut 10, die auf dem Abscherelement 9 an der Stelle zwischen der Unterlage 14 der Scharnierangel 3 und dem Halter 2 des Scharniers ausgebildet wird. Das Abscherelement 9 ist als eine Abscherschraube oder als ein Abscherbolzen ausgebildet.

In der Fig. 4 und 5 ist das einachsige Frontklappenscharnier des Fahrzeuges in der ausgefahrenen Aktivstellung dargestellt.

Das einachsige Scharnier ist an beiden Seiten der Frontklappe ausgeführt.

Im eingebauten Zustand, dh. in der Ausgangsruhelage, funktioniert das ganze System wie ein standardmäßiges einachsiges Scharnier der Fahrzeugfrontklappe.

Bei einer Aktivierung durch die Steuereinheit wird die pyrotechnische Treibladung in der Pyropatrone 12 gezündet. Dadurch wird ein großer Druckanstieg im Bereich unter dem Kolben 6 erzeugt. Dieser Druck beginnt mit großer Kraft auf den Kolben 6 zu wirken und dadurch das Abscherelement 9 auf Abscherung zu beanspruchen. Dieses Abscherelement 9 ist so ausgelegt, damit es nach der Zündung der Pyropatrone 12 an der Stelle der erstellten Abschernut 10 zu seiner Abscherung kommt. Nach der Abscherung des Abscherelementes 9 wird durch die Einwirkung des Kolbens 6 und der Stange 7 der Scharnierschenkel 1 sehr schnell bewegt, bis der ganze Mechanismus in den oberen Totpunkt, dh. in die ausgefahrene Aktivstellung gelangt. Dadurch wird der Scharnierschenkel 1 zusammen mit der Frontklappe bewegt. Durch geeignete Parametereinstellung der pyrotechnischen Treibladung der Pyropatrone 12 und Auslegung der mechanischen Baugruppen wird das ganze System so eingestellt, damit die Frontklappe in vorgegebener Zeit und um vorgegebenen Hubmaß angehoben wird.

Der Bereich, wo die Explosion erfolgt, ist vom Sicherheitsgesichtspunkt so abgesichert, damit keine Flamme außerhalb des Zylinderbereiches 5 aufschlagen und eventuellen Brand verursachen kann.

Dieses System des einachsigen Frontklappenscharniers mit pyrotechnischer Aktivierung aufgrund der Informationen von elektronischer Steuereinheit hebt die Frontklappe im Scharnierbereich um ca. 100mm an, was den neuen Vorgaben für die Fahrzeugsicherheitslösungen von Sicht des sog. aktiven Fußgängerschutzes entspricht. Mit dieser Bewegung erhöht sich die Distanz zwischen der Frontklappe und der festen Motorteilen und des umliegenden Motorzubehörs. Die Vergrößerung der Distanz schafft eine stetigere Verzögerung der aufprallenden Person und reduziert zugleich die Möglichkeit des Kontaktes mit den festen Motorteilen und - zubehör, die sich im Bereich unter der Frontklappe befinden.

Der Vorteil dieser Lösung liegt in der einfachen, leichten Konstruktion, da zum Ausfahren keine starke Stahlfeder, sondern eine pyrotechnische Treibladung eingesetzt wird, die eine schnelle und verlässliche Funktion des Scharniers sichert. Diese Lösung ermöglicht Wiederverwendung der Teile, nur mit dem Austausch der Pyropatrone 12 und dem Einsatz eines neuen Abscherelementes 9 in der Scharnierangel 3.

Die Pyropatrone 12 wird in die Karosserie als Austauschteil eingebaut. Dies ermöglicht einfache Reparatur und vor allem das Grundscharnier an die Karosse im Rohzustand einzubauen, sodass die Frontklappe vor der Fahrzeuglackierung eingebaut und eingerichtet werden kann. Der nachträgliche Einbau der Pyropatrone 12 wird die Passung der Frontklappe keineswegs beeinflussen und ändern. Dies ist ein sehr wichtiger Vorteil der angeführten Lösung.

Für den Fall einer beschränkten Lebensdauer der Pyropatrone 12 ist derer Austausch ohne Ausbau des Frontklappenscharniers sehr einfach durchführbar.

### Industrielle Nutzbarkeit

Dieses System des einachsigen Scharniers mit pyrotechnischer Aktivierung gemäß Erfindung kann in allen Fahrzeugen eingesetzt werden.

### Verwendete Bezeichnungen

- 1: Scharnierschenkel
- 2: Scharnierhalter
- 3: Scharnierangel
- 4: pyrotechnischer Aktuator
- 5: Aktuatorzylinder
- 6: Aktuatorkolben
- 7: Aktuatorstange
- 8: Öse der Aktuatorstange
- 9: Abscherelement der Angel
- 10: Abschernut des Abscherelementes
- 11: Befestigungsmittel
- 12: Pyropatrone des Aktuators
- 13: Befestigungsschraube des Halters
- 14: umschließende Unterlage der Angel

## Patentansprüche

1. Einachsiges Frontklappenscharnier eines Fahrzeuges, das im hinteren Bereich der Frontklappe in der Nähe der Frontscheibe anzuordnen ist, umfassend:
einen mit der Frontklappe verbindbaren Scharnierschenkel (1),
einen mit der Fahrzeugkarosserie zu verbindenden Halter (2), auf dem mittels Befestigungsmittel (11) ein pyrotechnischer Aktuator (4) befestigt ist, wobei der Aktuator (4) eine Stange (7) mit Öse (8) umfasst,
sowie eine am Halter (2) befestigte Scharnierangel (3), wobei mit der Angel (3) der Scharnierschenkel (1) und die Öse (8) der Stange (7) des pyrotechnischen Aktuators (4) verbunden sind, **dadurch gekennzeichnet, dass** die Scharnierangel (3) ein Abscherelement (9) umfasst, so dass es nach Zündung der pyrotechnische Aktuator (4) zu einer Abscherung kommt.

2. Einachsiges Scharnier nach Anspruch 1 **dadurch gekennzeichnet, dass** die Scharnierangel (3) eine umschließende Unterlage (14) aufweist, die koaxial zwischen dem Abscherelement (9) und zwischen dem Scharnierschenkel (1) sowie der Öse (8) des Aktuators (4) angeordnet ist, wobei der Schenkel (1) und die Öse (8) schwenkbar mit der Unterlage (14) verbunden sind.

3. Einachsiges Scharnier nach Anspruch 1 und 2 **dadurch gekennzeichnet, dass** das Abscherelement (9) eine Abschernut (10) aufweist, die auf dem Abscherelement (9) an der Stelle zwischen der Unterlage (14) der Angel (3) und dem Scharnierhalter (2) ausgebildet ist.

4. Einachsiges Scharnier nach Ansprüchen 1 bis 3 **dadurch gekennzeichnet, dass** das Abscherelement (9) als eine Abscherschraube ausgebildet ist.

5. Einachsiges Scharnier nach Ansprüchen 1 bis 3 **dadurch gekennzeichnet, dass** das Abscherelement (9) als Abscherbolzen ausgebildet ist.

## Claims

1. Single axle cowling hinge of a vehicle, which is to be arranged in the vicinity of the windscreen in the rear region of the cowling, comprising:
a hinge limb (1) which can be connected to the cowling,
a holder (2) which is to be connected to the vehicle body and on which a pyrotechnic actuator (4) is fastened by means of fastening means (11), wherein the actuator (4) comprises a rod (7) with an eye (8),
and a hinge pintle (3) which is fastened to the holder (2), wherein the hinge limb (1) and the eye (8) of the rod (7) of the pyrotechnic actuator (4) are connected to the pintle (3), **characterized in that** the hinge pintle (3) comprises a shearing element (9) such that shearing occurs after the pyrotechnic actuator (4) is ignited.

2. Single axle hinge according to Claim 1, **characterized in that** the hinge pintle (3) has a surrounding base (14) which is arranged coaxially between the shearing element (9) and between the hinge limb (1) and the eye (8) of the actuator (4), the limb (1) and the eye (8) being connected pivotably to the base (14).

3. Single axle hinge according to Claims 1 and 2, **characterized in that** the shearing element (9) has a shearing groove (10) which is formed on the shearing element (9) at the point between the base (14) of the pintle (3) and the hinge holder (2).

4. Single axle hinge according to Claims 1 to 3, **characterized in that** the shearing element (9) is designed as a shearing screw.

5. Single axle hinge according to Claims 1 to 3, **characterized in that** the shearing element (9) is designed as a shearing bolt.

## Revendications

1. Charnière de capot à un axe de véhicule disposée dans la zone arrière du capot à proximité de la vitre avant, comprenant :
un côté de charnière (1) pouvant être relié au capot ;
un support (2) à relier à la carrosserie de véhicule sur lequel un actionneur pyrotechnique (4) est fixé à l'aide de moyens de fixation (11), l'actionneur (4) comprenant une barre (7) équipée d'un oeillet (8) ;
ainsi qu'un gond de charnière (3) fixé au support (2), le gond (3) étant relié au côté de charnière (1) et l'oeillet (8) étant relié à la barre (7) de l'actionneur pyrotechnique (4),
**caractérisée en ce que** le gond de charnière (3) comprend un élément de cisaillement (9) permettant de réaliser un cisaillement après l'allumage de l'actionneur pyrotechnique (4).

2. Charnière à un axe selon la revendication 1, **caractérisée en ce que** le gond de charnière (3) comporte un socle (14) alentour disposé dans le plan coaxial entre l'élément de cisaillement (9) et entre le côté de charnière (1) ainsi que l'oeillet (8) de l'actionneur (4), le côté (1) et l'oeillet (8) étant reliés de façon à pouvoir pivoter avec le socle (14).

3. Charnière à un axe selon la revendication 1 et 2, **caractérisée en ce que** l'élément de cisaillement (9) comporte une rainure de cisaillement (10) réalisée sur l'élément de cisaillement (9) au niveau du point situé entre le socle (14) du gond (3) et le support de charnière (2).

4. Charnière à un axe selon l'une quelconque des revendications 1 à 3, **caractérisée en ce que** l'élément de cisaillement (9) prend la forme d'une vis de cisaillement.

5. Charnière à un axe selon l'une quelconque des revendications 1 à 3, **caractérisée en ce que** l'élément de cisaillement (9) prend la forme d'un boulon de cisaillement.
